# FASCICULE DE BREVET EUROPEEN

(11) **EP 0 539 752 B1**
(45) Date de publication et mention de la délivrance du brevet: **31.07.1996**
(21) Numéro de dépôt: 92116809.2
(22) Date de dépôt: 01.10.1992
(51) Int. Cl.: C21B 7/12

(54) **Machine de perçage d'un trou de coulée d'un four à cuve**
Schachtofen-Abstichlochbohrer
Apparatus for opening the taphole of a shaft furnace

(30) Priorité: 31.10.1991 LU 88029; 05.08.1992 LU 88157
(43) Date de publication de la demande: 05.05.1993
(73) Titulaire: PAUL WURTH S.A., L-1122 Luxembourg (LU)
(72) Inventeur: Lonardi, Emile, L-4945 Bascharage (LU); Malivoir, Philippe, F-57100 Thionville (FR); Metz, Jean, L-2335 Luxembourg (LU); Roemen, Fernand, L-2738 Luxembourg-Cents (LU); Milen, Patrick, L-3332 Fennange (LU)
(74) Mandataire: Freylinger, Ernest T.

(56) Documents cités:
- EP-A- 0 379 018
- DE-A- 3 339 127
- GB-A- 2 207 741

## Description

La présente invention concerne une machine de perçage d'un trou de coulée d'un four à cuve, conçue pour la mise en oeuvre du procédé de la tige perdue dans lequel, après avoir obturé le trou de coulée avec une masse de bouchage, on enfonce dans celle-ci, avant son durcissement complet, une tige métallique et on extrait celle-ci, au moment voulu, en vue de l'ouverture du trou de coulée. Ladite machine comprend un affût, au moins un appui à l'avant de l'affût, un appui coulissant à l'arrière de l'affût et une pince, conçue pour agripper la tige qui la traverse et pour lui transmettre un effort axial lors de l'opération d'introduction de la tige dans la masse de bouchage, ladite pince étant montée de façon coulissante sur l'affût et déplaçable le long de celui-ci, sous l'action d'un vérin hydraulique ayant une course L inférieure à la longueur de la tige.

Les machines utilisées jusqu'à présent pour la mise en oeuvre de ce procédé de la tige perdue sont en principe des foreuses classiques. Ces machines sont conçues pour forer le trou de coulée à l'aide d'un foret accouplé à un organe de travail. Cet organe de travail, déplaçable le long de l'affût sous l'action d'un moyen d'entraînement, comporte en conséquence une foreuse rotative, un percuteur soutenant l'opération de forage et un mandrin pour recevoir le foret. Pour pouvoir utiliser ces foreuses classiques aussi pour l'application du procédé de la tige perdu susmentionnée, elles ont subi quelques transformations. Ainsi l'organe de travail a été équipé d'un puissant percuteur bi-directionnel pour développer l'énergie nécessaire à l'introduction et à l'extraction de la tige de perçage, et le mandrin a été remplacé par un moyen pour transmettre à la tige l'énergie ainsi développée par le percuteur par exemple d'une pince pour agripper l'extrémité libre de la tige.

Or, un percuteur puissant, comme on l'utilise sur ces machines, n'est pas sans inconvénients. D'abord, il impose d'importantes sollicitations et vibrations au matériel, notamment à la pince d'accouplement avec la tige, qui est soumis de ce fait à une usure rapide. Il est aussi extrêmement bruyant et ne remplit souvent pas les normes, de plus en plus sévères, visant à une réduction du niveau sonore en milieu industriel.

La demande de brevet EP 0 379 018 fournit des indications pour remédier partiellement à ces inconvénients. Elle propose un procédé d'extraction de la tige en plusieurs phases, par un mouvement de va-et-vient d'une pince sous l'action d'un vérin hydraulique silencieux. Le percuteur pneumatique, qui ne doit plus être bi-directionnel car il n'est plus utilisé pour l'extraction, est néanmoins toujours nécessaire pour une mise en place efficace et rapide de la tige de perçage.

Les inconvénients du percuteur incitent aussi à la suppression de la percussion lors de la phase d'introduction. On pourrait par exemple envisager de soumettre l'organe de travail à un moyen d'entraînement plus puissant pour faire pénétrer la tige en force et sans vibrations dans la masse d'obturation semi-durcie. Malheureusement, cette tentative semble, à priori, ne pas être réalisable. En effet, vu la longueur de la tige, une poussée plus puissante sans percuteur risque de provoquer d'abord un flambage de la tige et ensuite son blocage définitif dans une position partiellement enfoncée dans la masse en cours de durcissement rapide.

Une solution ingénieuse au problème d'introduction en force de la tige est suggérée dans le fascicule de brevet luxembourgeois LU-87 915. Ce brevet propose une pince bi-directionnelle dont le mouvement alternatif de va-et-vient à l'avant de l'affût est utilisé aussi bien pour l'introduction que pour l'extraction de la tige de perçage. Cette proposition semble donc être la solution optimale dans la mesure où elle permet de se passer complètement du percuteur bruyant et destructeur de la pince. Un désavantage de cette machine est que la pince bi-directionnelle et les moyens qui l'actionnent sont situés dans la région avant de l'affût. Or, cette région est une zone à risques d'éclaboussures lorsque le jet en fusion s'échappe du trou de coulée après l'extraction de la tige.

Le but de la présente invention est de proposer une machine du genre de celle proposée dans le préambule qui permet d'éliminer le risque d'encrassement et de destruction de la pince et de son vérin d'entraînement lors de l'opération d'extraction de la tige, tout en conservant les avantages acquis.

Pour atteindre cet objectif, la machine proposée par la présente invention est caractérisée en ce que le vérin est, lui-même, monté de façon coulissante sur l'affût et déplaçable le long de celui-ci sous l'action d'un puissant moyen d'entraînement, et en ce qu'un moyen d'accouplement, conçu pour transmettre un effort axial à l'extrémité libre de la tige dans le sens de l'extraction de celle-ci, est solidaire de la pince.

L'extraction de la tige n'est donc plus réalisée par un mouvement alternatif de va-et-vient de la pince à l'avant de l'affût, mais par un mouvement continu de recul de celle-ci, sous l'action combinée du vérin hydraulique et de son moyen d'entraînement. La pince et le vérin sont ainsi dégagés de la zone à risques d'éclaboussures, avant l'ouverture du trou de coulée et le jaillissement du jet de matières en fusion. De plus, le danger d'encrassement de la pince est sensiblement réduit, car la tige de perçage retirée du trou de coulée ne passe plus à travers la pince. En effet, cette dernière est rendue solidaire de l'extrémité libre de la tige de perçage sortant du trou de coulée et en reste solidaire jusqu'à la fin de l'opération d'extraction. Enfin, l'extraction devient plus rapide, étant donné qu'elle est réalisée par un mouvement continu et n'implique plus de va-et-vient de la pince.

Il est rappelé que l'introduction de la tige de perçage dans la masse de bouchage est réalisée de la façon suivante :
après avoir enfilé la tige de perçage à travers la pince et l'avoir rendue solidaire de l'appui coulissant à l'arrière de l'affût, on amène la pince ouverte, en actionnant ledit moyen d'entraînement à une distance L de l'avant de l'affût qui correspond approximativement à la course L du vérin. On ferme la pince et on fait avancer la tige à l'aide de la pince de la longueur L par une extension dudit vérin. On ouvre ensuite la pince et on la ramène à la distance L de l'avant de l'affût par une rétraction dudit vérin. On ferme à nouveau la pince et on fait avancer la tige d'une seconde longueur L par une nouvelle extension dudit vérin. Ce mouvement de va-et-vient de la pince sur ladite distance L à l'avant de l'affût est répété jusqu'à ce que la tige soit enfoncée de la longueur souhaitée dans le trou de coulée.

Il est à noter que ladite longueur L, c'est-à-dire la course du vérin, est déterminée de façon à éviter un flambage de la tige lors de son introduction.

La machine proposée élimine en conséquence d'une manière ingénieuse tout risque d'encrassement et de destruction de la pince lors de l'opération d'extraction de la tige. Elle offre l'avantage de pouvoir travailler sans percuteur, aussi bien lors de l'opération d'extraction de la tige que lors de l'opération d'introduction de la tige. Il s'ensuit que la machine n'a plus aucun problème à respecter les prescriptions en ce qui concerne la réduction du niveau sonore en milieu industriel et que le matériel, et plus spécialement la pince, n'est plus soumis à des vibrations importantes qui sont à l'origine d'une usure rapide. Il sera aussi apprécié que l'élimination du percuteur bi-directionnel simplifie la construction dudit organe de travail, ce qui augmente la fiabilité de ce dernier et réduit en même temps son prix de revient.

Dans une première exécution préférentielle, ledit puissant moyen d'entraînement comprend un second vérin hydraulique. Il s'agit d'un moyen d'entraînement fiable, à système de commande simple et à prix de revient relativement faible.

Ce deuxième vérin est avantageusement monté sur l'affût de façon que le cylindre dudit premier vérin soit solidaire du cylindre dudit second vérin et que l'extrémité de la tige-piston de ce second vérin soit ancrée à l'arrière de l'affût. Ce mode de montage permet d'avoir une longueur hors tout de la machine particulièrement faible, ce qui représente un avantage certain, vu l'espace généralement réduit disponible autour du haut-fourneau.

Le second vérin est alors avantageusement alimenté en un fluide hydraulique à travers sa tige-piston et le premier vérin est avantageusement alimenté à travers le second vérin. Cette solution élimine l'emploi de tuyaux flexibles ou articulés pour alimenter les deux vérins en fluide hydraulique. On évite ainsi de trop encombrer la machine et on réduit en même temps le risque d'un arrachement d'une conduite hydraulique.

Dans une deuxième exécution, ledit puissant moyen d'entraînement comprend au moins une chaîne sans fin installée axialement dans l'affût et un moteur, dont le sens de rotation peut être inversé, installé à l'arrière de l'affût. Un avantage principal de cette deuxième exécution est la hauteur réduite de la machine. En effet, la chaîne est beaucoup moins encombrante que le deuxième vérin de la première exécution préférentielle. De plus, l'utilisation de la chaîne en remplacement du deuxième vérin permet aussi de réaliser des bras de levier moins importants dans la transmission des forces de traction au premier vérin. Il en résulte que les pressions de contact, auxquelles les organes de coulissement du premier vérin et de la pince sont soumis, sont nettement réduites, ce qui permet de dimensionner ces organes plus petits. La course du déplacement du premier vérin sur l'affût est avantageusement limité par une première butée et une deuxième butée solidaires de l'affût. La distance entre ces deux butées est approximativement égale à la différence entre la longueur de la tige de perçage et la course L du premier vérin hydraulique.

Il sera noté que la pince est préférentiellement supportée par un premier chariot, alors que le premier vérin est supporté par un deuxième chariot. Le premier et le deuxième chariot sont alors guidés, lors du déplacement sur l'affût, par au moins une paire de rails parallèles qui sont solidaires de l'affût. L'axe de la tige-piston du premier vérin est avantageusement contenu dans le plan passant par les axes des deux rails. Ce montage permet de réaliser avec des moyens simples un excellent guidage de la pince et du premier vérin sur l'affût et réduit en même temps, dans la mesure du possible, les bras de levier dans la transmission des forces.

Ledit moyen d'accouplement, conçu pour transmettre un effort axial à l'extrémité libre de la tige dans le sens de l'extraction de celle-ci, est avantageusement intégré dans la pince. Ce moyen d'accouplement peut par exemple être constitué d'une clavette transversale, qui coopère avec un méplat usiné dans l'extrémité de la tige pour bloquer cette dernière axialement dans la pince.

La pince utilisée sur la machine peut cependant aussi être une pince bi-directionnelle, telle qu'elle est par exemple décrite dans le fascicule de brevet luxembourgeois LU-87 917 ou dans le fascicule de brevet d'addition LU-88 020. Cette pince permet alors d'agripper la tige avec une première paire de mâchoires, lors de l'opération d'introduction de la tige par un mouvement de va-et-vient. Pendant l'opération d'extraction de la tige, l'extrémité libre de celle-ci est rendue solidaire de la pince par l'intermédiaire d'une seconde paire de mâchoires. Ces dernières sont agencées dans la pince de façon à transmettre un effort de traction dans le sens de l'extraction de la tige. On notera que l'utilisation d'une paire de mâchoires pour l'extraction de la tige a l'avantage de pouvoir travailler avec des tiges lisses qui ne nécessitent pas de travaux préparatoires sur la tige, tel que l'usinage d'un méplat.

Dans une variante d'exécution intéressante, ledit moyen d'accouplement, conçu pour transmettre un effort axial à l'extrémité libre de la tige dans le sens de l'extraction de celle-ci, est intégré dans un accouplement monté sur un organe de travail coulissable librement sur l'affût. Ledit accouplement est alors muni d'une surface d'appui agencée de façon que la pince puisse prendre appui sur cette dernière lors de son mouvement de recul. Par le fait que la pince puisse prendre directement appui sur l'accouplement solidaire de l'organe de travail, ce dernier est simplement poussé devant la pince et ne doit transmettre lui-même aucun effort de traction. Il est évident que dans ce cas, la pince ne devra pas nécessairement comporter des moyens spéciaux pour être accouplée à l'extrémité de la tige à extraire, ce qui rend sa conception plus simple. Reste à noter que, si on veut automatiser le moyen d'accouplement intégré à l'accouplement solidaire de l'organe de travail, on disposera déjà sur ce dernier une alimentation en fluide hydraulique qui convient à et effet. De cette façon, on peut éviter l'installation d'une conduite d'alimentation supplémentaire vers la pince.

Dans une réalisation avantageuse, l'organe de travail comprend des moyens pour être accouplé au premier chariot supportant la pince de façon à être déplaçable par celui-ci. De cette façon, on n'a pas besoin d'installer sur l'affût un second moyen d'entraînement pour l'organe de travail, ce qui diminue les coûts de fabrication de la machine.

Ledit appui à l'avant de l'affût est avantageusement constitué par deux volets pivotants définissant entre eux une ouverture de passage et de support de la tige et formant en même temps un bouclier de protection contre les éclaboussures issus du trou de coulée.

La machine peut aussi comprendre un appui déplaçable le long de l'affût. Cet appui déplaçable peut alors remplir le rôle de l'appui avant de la tige de perçage.

D'autres particularités et caractéristiques ressortiront de la description détaillée d'un mode de réalisation avantageux, présenté ci-dessous, à titre d'illustration, en se référant aux dessins annexés, dans lesquels :
- la Figure 1 montre schématiquement une section longitudinale d'une machine de perçage proposée, en position de préparation pour l'introduction d'une tige de perçage dans la masse de bouchage ;
- la Figure 2 montre une vue analogue à la Figure 1, juste avant le premier mouvement d'introduction de la tige de perçage ;
- la Figure 3 montre une vue analogue à la Figure 1, juste après le premier mouvement d'introduction de la tige de perçage ;
- la Figure 4 montre une vue analogue à la Figure 1 en phase de préparation pour l'extraction de la tige ;
- la Figure 5 montre une vue analogue à la Figure 1, après l'extraction de la tige ;
- la Figure 6 montre une coupe suivant le plan A-A sur la Figure 5 ;
- la Figure 7 est un schéma de principe de l'alimentation hydraulique des deux vérins de la machine selon les Figures 1 à 6 ;
- la Figure 8 montre schématiquement une section longitudinale d'une variante d'exécution de la machine de perçage proposée, en position de préparation pour l'introduction d'une tige de perçage dans la masse de bouchage ;
- la Figure 9 montre une vue analogue à la Figure 8, juste avant le premier mouvement d'introduction de la tige;
- la Figure 10 montre une vue analogue à la Figure 8, juste après le premier mouvement d'introduction de la tige;
- la Figure 11 est une coupe transversale schématique à travers la machine de perçage des Figures 8 à 10.

Toutes les Figures reprennent les mêmes chiffres de référence pour désigner les mêmes pièces.

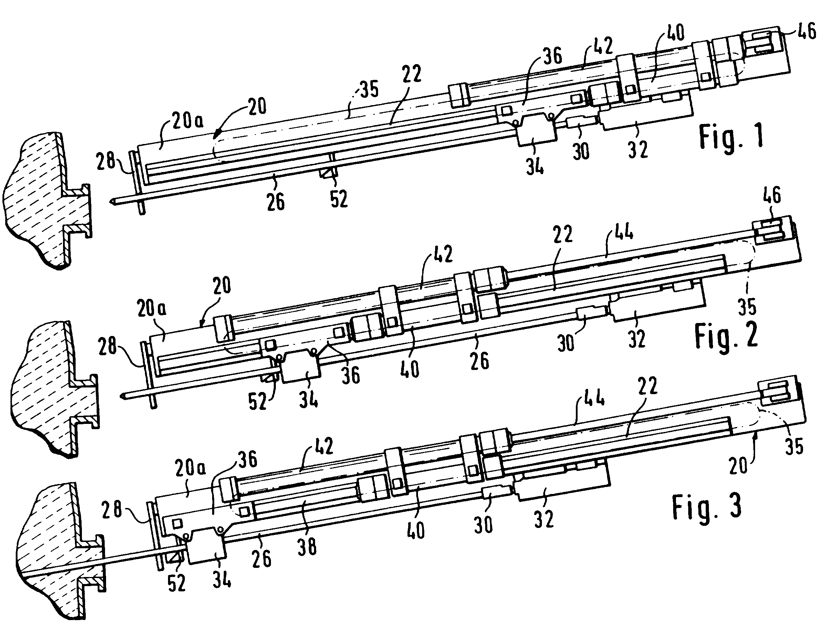

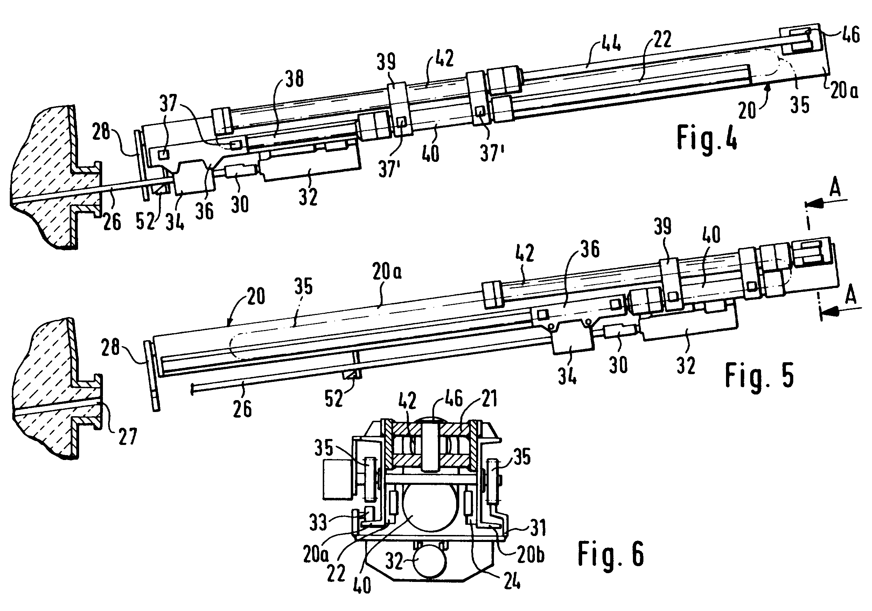

Pour la description de la construction de la machine on se réfère d'abord aux Figures 1 et 6. L'ossature de la machine de perçage est constituée par un affût 20. Cet affût 20 est, par exemple, supporté de manière classique et connue à l'extrémité d'un bras porteur (non représenté). Ce bras porteur peut pivoter autour d'une console pour déplacer l'affût 20 entre une position de garage et une position opérative et vice versa.

L'affût 20 peut par exemple être formé de deux poutres parallèles 20a, 20b réunies entre elles (Cf. Figure 6). Sur la Figure 1 on ne voit que la poutre 20a, la poutre 20b ayant été enlevée pour montrer plus de détails. Les deux poutres 20a et 20b comportent, chacune sur sa face intérieure, un rail 22, 24. Ces deux rails sont disposés parallèlement et face à face. Seul le rail 22 est montré sur la Figure 1.

La référence 26 désigne une tige de perçage, encore appelée tige perdue, pour le procédé décrit ci-avant. Cette tige 26 est, de préférence, portée à l'avant de la machine par un appui fixe 28, par exemple un appui du genre proposé par la demande de brevet européen EP 0 064 644. Ce dernier comporte deux volets montés à l'avant de l'affût 20 et pouvant pivoter entre une position ouverte, facilitant l'engagement et la saisie de la tige 26 en vue de l'extraction de celle-ci, et une position fermée, dans laquelle ils définissent entre eux une ouverture supportant la tige 26. Les deux volets constituent donc un appui pour la tige 26 et forment en même temps un bouclier de protection contre les éclaboussures provenant du jet du trou de coulée.

La référence 52 est un appui intermédiaire coulissant le long de l'affût et dont la constitution et le fonctionnement font l'objet du fascicule de brevet GB 2 216 827. Le but de sa présence est le support de la tige 26 après son extraction du trou de coulée, c'est-à-dire lorsqu'elle n'est plus supportée par l'appui avant suite a un raccourcissement dû à la disparition de sa pointe par fusion dans le four (Cf. Figure 5).

A l'arrière, la tige 26 est supportée par un organe de travail 32, par l'intermédiaire d'un accouplement 30 solidaire de ce dernier. Cet organe de travail est supporté par un chariot 31 (Cf. Figure 6) coulissant le long de l'affût 20, par exemple à l'aide de galets de roulement 33 (dont un est représenté sur la figure 6). Ces galets 33 évoluent par exemple le long des flancs extérieurs des deux poutres 20a et 20b de l'affût 20. Le chariot 31 est relié à deux chaînes sans fin 35 prévues à l'extérieur des poutres 20a et 20b et destinées à déplacer le chariot 31 et l'outil 32 lors d'un forage classique. Ces chaînes 35 ne sont donc pas utilisées pour la mise en oeuvre du procédé de la tige perdue selon la présente invention.

L'outil de travail 32, qui comporte, de manière classique, une foreuse relative et un percuteur, n'est pas non plus utilisé dans le procédé de la tige perdue. La présence d'une foreuse et d'un percuteur n'est nécessaire que pour le forage du trou de coulée avec un foret selon le procédé classique. Il en résulte que, si le forage classique n'est pas nécessaire ou si ce forage peut être effectué d'une autre manière, l'organe de travail 32 pourra être supprimé et remplacé simplement par un appui coulissant assurant le support de la tige de perçage 26 à l'arrière.

La référence 34 est une pince, par exemple une pince bi-directionnelle du genre proposé dans le fascicule de brevet luxembourgeois LU-87 915 ou dans le fascicule de son brevet d'addition LU-88 020. Cette pince comporte en l'occurrence une première paire de mâchoires agencées autour d'un canal de passage de la tige de façon à pouvoir agripper la tige 26 pour lui transmettre un effort axial dans le sens de l'introduction de la tige dans la masse de bouchage ; et une seconde paire de mâchoires agencées autour de ce même canal de façon à pouvoir agripper la tige 26 pour lui transmettre une traction axiale dans le sens inverse, c'est-à-dire dans le sens de l'extraction de la tige 26 du trou de coulée.

La pince 34 est supportée par un chariot 36 monté par exemple sur des patins 37 déplaçables dans les rails 22, 24 de l'affût 20. Il est à noter que la pince 34 peut par exemple fonctionner par voie pneumatique et doit ainsi être raccordée au circuit pneumatique de la machine par des moyens appropriés, par exemple des tuyaux flexibles ou des tuyaux à articulations.

Le chariot 36 est fixé à une tige-piston 38 d'un vérin hydraulique 40. Ce vérin 40, qui a une course L, est installé sur un second chariot 39, monté par exemple sur des patins 37' guidés dans les rails 22 et 24 de l'affût 20. Il est à noter que l'axe de ce vérin est parallèle aux axes des rails 22 et 24 et est placé, dans les limites de l'espace disponible sur l'affût, de façon à optimiser les pressions de contact sur les patins 37 et 37'. Sur la Figure 1, l'axe du vérin 40 est par exemple contenu dans le plan passant par l'axe des rails 22, 24, il s'ensuit que la transmission des forces entre le chariot 39 et le vérin 40 ne crée pas de moment supplémentaire qui augmente lesdites pressions de contacts.

Dans une première réalisation, représentée sur les Figures 1 à 7, le second chariot 39 supportant le cylindre du vérin 40 est rendu solidaire du cylindre d'un second vérin 42 plus long que le vérin 40. Ce vérin 42 est parallèle au premier vérin 42 et orienté dans le sens contraire de celui-ci, c'est-à-dire que sa tige-piston 44 est ancrée, à l'arrière, sur l'affût 20 (Cf. référence 46 sur la Figure 6). Le premier vérin 40 est, par conséquent, déplaçable le long de l'affût 20 sous l'action du vérin 42, lorsque le cylindre de celui-ci est dégagé de sa tige-piston 44. Certes, le vérin 42 pourrait être orienté dans le même sens que le vérin 40, mais la réalisation représentée sur les Figures 1 à 5 mérite la préférence, étant donné que le vérin 42 n'allonge pas la machine. En effet, s'il était orienté dans le même sens, le cylindre du vérin 42 devrait être disposé à l'arrière dans le prolongement de l'affût 20.

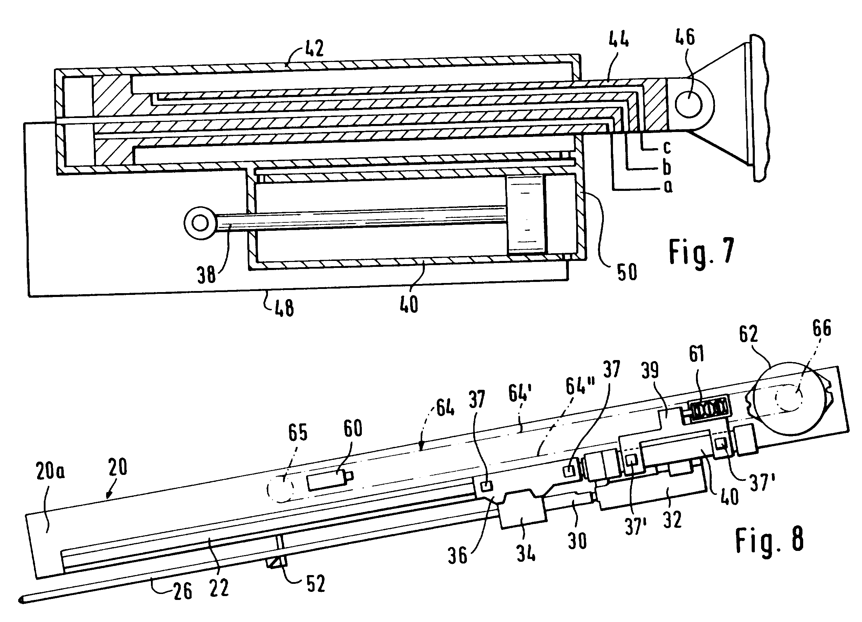

La Figure 7 illustre un mode d'exécution avantageux de l'alimentation hydraulique des deux vérins 40 et 42. Le vérin 42 est alimenté à travers deux conduites a et c traversant sa tige de piston 44. Le vérin 40 est alimenté, d'un côté, pour le dégagement de sa tige 38, par une conduite b traversant axialement tout le vérin 42 et prolongé par une conduite extérieure 48 jusqu'au cylindre de ce vérin 40 et, de l'autre côté, pour la rétraction de sa tige 38, par une communication directe 50 avec le cylindre du vérin 42, de façon à être relié par ce dernier à la conduite C. L'alimentation des deux vérins pourrait également être réalisée par des conduites extérieures télescopiques. Aussi bien l'alimentation par conduites télescopiques, que celle représentée sur la Figure 7 permettent de réduire au maximum la présence de tuyaux flexibles, toujours dangereux, ou de conduites articulées encombrantes.

On va maintenant décrire le fonctionnement de la machine pour introduire la tige 26 dans le trou de coulée et pour l'en extraire. En vue de l'introduction de la tige 26, celle-ci est chargée dans la machine, de préférence lorsque l'affût se trouve dans la position de garage et que les deux vérins 40, 42 occupent la position selon la Figure 1. Le chargement est réalisé en enfilant la tige 26 à travers la pince 34 dans l'accouplement 30 de l'organe de travail 32. Durant ce chargement, les volets de l'appui avant 28 sont de préférence ouverts pour faciliter le chargement de la tige 26 et sont refermés immédiatement après pour supporter la partie avant de la tige 26.

Lorsque la tige 26 est en place selon la Figure 1, le vérin 42 est actionné à fond pour faire avancer le vérin 40 et la pince 34 dans la position selon la Figure 2, qui se situe environ à une distance L, égale à la course L du vérin 40, de l'avant de l'affût. La pince 34, qui n'est pas fermée, peut glisser librement par rapport à la tige 26 qui est maintenue par l'organe de travail 32. En principe il serait possible d'avancer les vérins 40, 42 dans la position opérative selon la Figure 2 avant de charger la tige 26, mais il est plus facile d'engager la tige lorsque les vérins 40, 42 occupent la position retirée selon la Figure 1.

A partir de la position de la Figure 2 on peut entamer le processus d'introduction de la tige 26 dans la masse du trou de coulée. Cette opération s'effectue de la même manière que celle proposée dans le fascicule de brevet luxembourgeois No 87 915. A cet effet, le vérin 40 et la pince 34 sont activés simultanément, ce qui a pour effet de fermer la pince 34 et de la déplacer d'une distance L de la position de la Figure 2 vers celle de la Figure 3, en entraînant la tige 26 et l'outil de travail 32. Le sens du fluide hydraulique est ensuite inverse ce qui a pour effet d'ouvrir la pince 34 et de la reculer sous l'action du vérin 40 dans la position de départ de la Figure 2. La tige 26 reste en place, étant donné que la pince 34 est ouverte et peut coulisser le long de la tige immobile 26. Ce mouvement de va-et-vient de la pince 34 d'une course L est ensuite répété autant de fois que nécessaire pour introduire la tige 26 dans le trou de coulée.

Pour extraire la tige du trou de coulée, l'affût 20 est déplacé vers le trou de coulée. L'appui 28 est, de préférence, ouvert pour ne pas heurter l'extrémité de la tige 26 émergeant du trou de coulée. La pince 34 est ensuite déplacée par les deux pistons 40 et 42 dans la position de la Figure 4 dans laquelle, lorsque l'affût est correctement positionné, l'extrémité libre de la tige 26 dans le trou de coulée est engagée à travers la pince 34. Le circuit d'alimentation de la pince 34 est ensuite inversé de manière que la pince 34 se ferme. Les deux vérins 40, 42 sont alors actionnés simultanément ce qui a pour effet de déclencher le mouvement de retrait des deux vérins 40 et 42 en direction de la position de la Figure 5, la pince 34 entraînant la tige 26. L'appui 28 a été fermé avant le déclenchement du mouvement de retrait de la pince 24 pour supporter la tige 26 lorsque son extrémité est dégagée du four et pour former un bouclier de protection de la partie avant de la machine.

Lorsque les deux vérins 40, 42 sont bien équilibrés entre eux et que les surfaces actives de leurs pistons sont égales, ils fonctionnent simultanément, de sorte que leurs actions se superposent pour accélérer le déplacement de la pince 34 de la position de la Figure 4 vers celle de la Figure 5.

La pince 34 n'effectue plus le mouvement de va-et-vient à l'avant de la machine lors de la phase d'extraction, mais elle est reculée d'un mouvement continu vers la position de la Figure 1. La pince 34 est donc éloignée rapidement de la zone dangereuse et se trouve à l'abri d'éclaboussures lorsque l'extrémité avant de la tige 26 libère le trou de coulée et que la matière en fusion jaillit de celui-ci.

Le tableau ci-après résume l'alimentation coordonnée des deux vérins pour l'extraction et l'introduction de la tige 26 (Cf. également Figure 7).

| | | conduites | | |
|---|---|---|---|---|
| | | a | b | c |
| Introduction | 1) vérin 42: dégagement | x | o | o |
| | 2) vérin 42: dégagé | x | x | o |
| | vérin 40: dégagement | | | |
| | 3) vérin 42: dégagé | x | o | x |
| | vérin 40: rétraction ... répétition 2) +3)... | | | |
| | 4) vérin 42: rétraction | o | o | x |
| | vérin 40: rétraction | | | |
| | | | | |
| Extraction | 5) vérin 42: dégagement | x | x | o |
| | vérin 40: dégagement | | | |
| | 6) vérin 42: rétraction | o | o | x |
| | vérin 40: rétraction | | | |

| | | | | |
|---|---|---|---|---|
| x : conduite sous pression | | | | |
| o : conduite dépressurisée | | | | |

Les opérations 1-4 sont réalisées successivement par la commande des pressions dans les conduites a, b, c en vue de l'introduction de la tige 26, les opérations 2 et 3 devant être répétées plusieurs fois pour assurer le mouvement alternatif de va-et-vient de la pince 34 entre les positions des Figures 2 et 3. L'extraction de la tige 26 selon les Figures 4 et 5 ne comporte que les deux opérations 5 et 6.

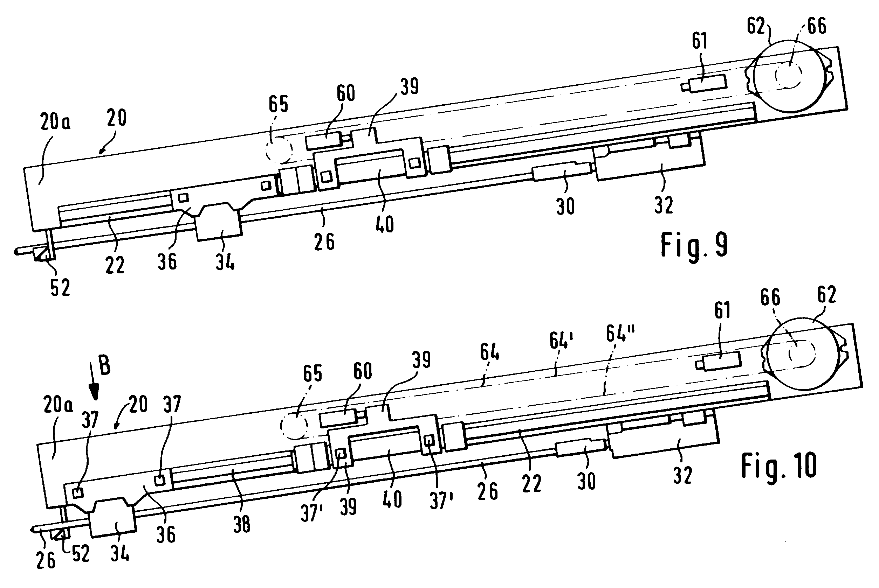

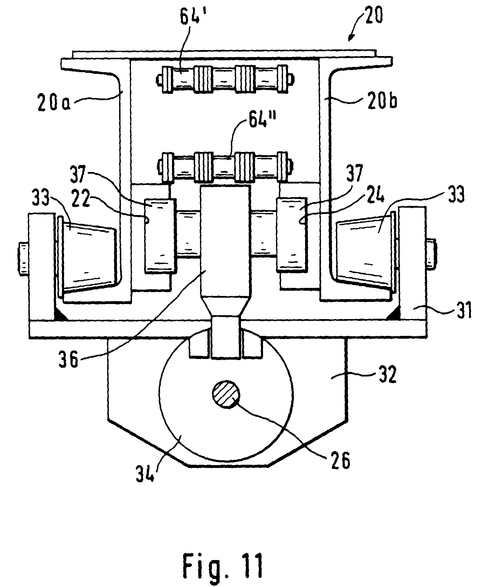

Les Figures 8 à 11 représentent un deuxième mode de réalisation du moyen d'entraînement du vérin 40 sur l'affût 20.

Sur ces Figures, on voit qu'entre les deux poutres 20a et 20b est montée, parallèlement aux rails 22 et 24, au moins une chaîne sans fin 64. Cette chaîne 64, qui a de préférence ses deux brins 64', 64'' superposés, est tendue entre une roue dentée menée 65, montée à une certaine distance de l'avant de l'affût 20, et une roue dentée menante 66 montée à l'arrière de l'affût 20. La roue menante 66 est entraînée par au moins un moteur 62, fixé à l'arrière de l'affût 20. Il s'agit de préférence d'un moteur hydraulique dont le sens de rotation peut être inversé par un système de commande qui est connu en soi.

Le chariot 39 supportant le vérin 40 est fixé au brin inférieur 64'' de la chaîne sans fin 64 et peut, en conséquence, être entraîné par celle-ci entre une butée 60 montée à proximité de la roue menée 65 et une butée 61 montée à proximité de la roue menante 66. La course du chariot 39 entre les deux butées 60 et 61 correspond approximativement à la différence entre la longueur de la tige de perçage et la course L du vérin 40. Il est à noter que le brin inférieur 64'' de la chaîne 64 se trouve de préférence le plus près possible du plan contenant les axes des rails 22 et 24 afin d'éviter tout moment supplémentaire dans la transmission des forces.

Le principe de fonctionnement de cette machine des Figures 8 à 11 est le même que celui décrit pour la machine des Figures 1 à 7. Le déplacement du vérin 40 à une distance L de l'avant de l'affût 20 et le recul du vérin 40 de cette position vers l'arrière de l'affût est réalisé par une rotation de la chaîne sans fin 64, soit dans un sens, soit dans l'autre sens. Le mouvement de va-et-vient de la pince 34 pour l'introduction de la tige de perçage 26 est naturellement effectué par le vérin 40.

Pour extraire la tige de perçage 26 du trou de coulée, l'affût 20 est déplacé vers le trou de coulée. Le chariot 39 est déplacé, par une rotation du moteur 62, contre la butée avant 60. Lorsque l'affût est correctement positionné, la tige-piston 38 du vérin 40 est sortie et l'extrémité libre de la tige 26 s'engage à travers la pince 34 qui est ouverte. Le circuit d'alimentation de la pince 34 est ensuite inversé afin que cette dernière se ferme. On actionne alors simultanément le moteur 62 pour retirer le chariot 39 et le vérin 40 pour rétracter la tige-piston 38. De préférence, le piston et le moteur sont équilibrés de façon que la tige-piston 38 soit rétractée entièrement avant que le chariot 39 du vérin 40 ne heurte la butée arrière 61. Ainsi l'alimentation hydraulique du vérin et du moteur pourra avantageusement être coupée automatiquement par un commutateur de fin de course associé à cette butée 61.

Il convient de préciser qu'une extraction en force de la tige 26 par l'organe de travail 32 est impossible car il est bien connu que l'organe de travail 32, renfermant au moins une foreuse rotative et un percuteur, n'est normalement pas dimensionné pour transmettre un effort de traction important à la tige 26. Il sera ainsi apprécié qu'on propose une variante intéressante pour l'opération d'extraction, qui permet d'utiliser l'accouplement 30 de l'organe de travail 32 pour transmettre un effort de traction à la tige.

Cet accouplement 30, solidaire de l'organe de travail 32, sera alors muni de moyens pour transmettre à l'extrémité libre de la tige 26 un important effort de traction. Ainsi, l'accouplement 30 peut par exemple être une pince à mâchoires, du genre de celle décrite dans la demande de brevet européen EP 0 379 018. On pourrait cependant aussi utiliser un accouplement à clavette transversale ou tout autre type d'accouplement permettant de transmettre un effort important de traction à une extrémité de tige. La pince 34 peut, dans ce cas, être une pince uni-directionnelle, conçue uniquement pour l'introduction de la tige 26. La pince 34 est laissée ouverte, et l'extrémité libre de la tige 26 la traverse pour être rendue solidaire dudit accouplement 30. Lors de son retour en arrière la pince 34 prend directement appui sur l'accouplement 30 et pousse ainsi l'organe de travail 32 devant soi (Cf. Figure 8). Vu que la transmission de l'effort de traction se fait directement sur l'accouplement 30 et non sur l'organe de travail 32, ce dernier n'aura à supporter aucun effort de traction. Il précédera simplement la pince 34 et l'accouplement 30 lors de leur mouvement de recul. Cette variante d'extraction apporte en premier lieu des avantages constructifs. Ainsi la construction de la pince 34 devient plus simple car elle ne doit comporter qu'une seule paire de mâchoires. De plus, elle ne doit être raccordée qu'à un seul circuit de commande.

On remarquera en outre que le chariot 36 supportant la pince 34 et le chariot 31 supportant l'organe de travail 32 peuvent être rendus solidaires. A cet effet, un crochet solidaire du chariot 31 peut être engagé, manuellement ou automatiquement, dans un tenon solidaire du chariot 36. Ainsi l'organe de travail 32 n'a pas besoin d'un propre système d'entraînement sur l'affût 20 pour effectuer par exemple un forage avec un foret classique.

Reste à noter que, si l'organe de travail 32 n'est pas utilisé, il sera de préférence bloqué à l'arrière de l'affût à l'aide d'un frein automatique ou manuel.

Il sera apprécié que la présente invention propose une machine qui, par sa conception robuste et efficiente apporte certainement un progrès technique substantiel en ce qui concerne ledit procédé de la tige perdue. Il sera notamment apprécié qu'elle contribue par son fonctionnement quasi silencieux à diminuer sensiblement la pollution sonore en milieu industriel.

## Revendications

1. Machine de perçage d'un trou de coulée d'un four à cuve, conçue pour la mise en oeuvre du procédé de la tige perdue dans lequel, après avoir obturé le trou de coulée avec une masse de bouchage, on enfonce dans celle-ci, avant son durcissement complet, une tige métallique (26) et on extrait celle-ci, au moment voulu, en vue de l'ouverture du trou de coulée, ladite machine comprenant un affût (20), au moins un appui (28, 52) à l'avant de l'affût (20), un appui coulissant (30) à l'arrière de l'affût (20) et une pince (34) conçue pour agripper la tige (26) qui la traverse et pour lui transmettre un effort axial lors de l'opération d'introduction de la tige (26) dans la masse de bouchage, ladite pince (34) étant montée de façon coulissante sur l'affût (20) et déplaçable le long de celui-ci sous l'action d'un vérin hydraulique (40) ayant une course L inférieur a la longueur de la tige, **caractérisée en ce que** ledit vérin (40) est lui-même monté de façon coulissante sur l'affût (20) et est déplaçable le long de celui-ci sous l'action d'un puissant moyen d'entraînement, et en ce qu'un moyen d'accouplement, conçu pour transmettre un effort axial à l'extrémité libre de la tige dans le sens de l'extraction de celle-ci, est solidaire de la pince (34) lors de l'opération d'extraction de la tige (26) du trou de coulée.

2. Machine selon la revendication 1, caractérisée en ce que ledit puissant moyen d'entraînement comprend un second vérin hydraulique (42).

3. Machine selon la revendication 2, caractérisée en ce que le cylindre dudit premier vérin (40) est solidaire du cylindre dudit second vérin (42), et en ce que l'extrémité de la tige-piston (44) de ce second vérin (42) est ancrée à l'arrière de l'affût (20).

4. Machine selon la revendication 3, caractérisée en ce que le second vérin (42) est alimenté en fluide hydraulique à travers sa tige-piston (44).

5. Machine selon la revendication 4, caractérisée en ce que le premier vérin (40) est alimenté en fluide hydraulique à travers le second vérin (42).

6. Machine selon la revendication 1, caractérisée en ce que ledit puissant moyen d'entraînement comprend au moins une chaîne sans fin (64) installée axialement dans l'affût (20) et un moteur (62) dont le sens de rotation peut être inversé, installé à l'arrière de l'affût (20).

7. Machine selon la revendication 6, caractérisée en ce que la course du déplacement du premier vérin (40) sur l'affût (20) est limitée par une première butée (60) et une deuxième butée (61), et en ce que la distance entre la première butée (60) et la deuxième butée (61) est approximativement égale à la différence entre la longueur de la tige (26) et la course L du vérin hydraulique (40).

8. Machine selon l'une quelconque des revendications 1 à 7, caractérisée en ce que la pince (34) est supportée par un premier chariot (36) et le premier vérin (40) est supporté par un deuxième chariot (39), en ce que le premier et le deuxième chariot (36 et 39) sont guidés dans leur déplacement sur l'affût par au moins une paire de rails parallèles (22, 24) solidaires de l'affût, et en ce que l'axe de la tige-piston (38) du premier vérin (40) est contenue dans le plan passant par les axes des deux rails (22, 24).

9. Machine selon l'une quelconque des revendications 1 à 8, caractérisée en ce que ledit moyen d'accouplement, conçu pour transmettre un effort axial à l'extrémité libre de la tige (26) dans le sens de l'extraction de celle-ci, est intégré dans la pince (34).

10. Machine selon la revendication 9, caractérisée en ce que ledit moyen d'accouplement comprend une paire de mâchoires agencées dans la pince de façon à ce qu'elles puissent transmettre un effort de traction dans le sens de l'extraction de la tige (26).

11. Machine selon l'une quelconque des revendications 1 à 8, caractérisée en ce que ledit moyen d'accouplement, conçu pour transmettre un effort axial à l'extrémité libre de la tige (26) dans le sens de l'extraction de celle-ci, est intégré dans un accouplement (30) monté sur un organe de travail (32) coulissable librement sur l'affût (20), et en ce que ledit accouplement (30) est muni d'une surface d'appui agencée de façon que la pince (34) puisse prendre appui sur cette dernière lors de son mouvement de recul.

12. Machine selon la revendication 8, caractérisée par un organe de travail (32) qui comprend des moyens d'accouplement au premier chariot (36) de façon à être déplaçable par celui-ci.

13. Machine selon l'une quelconque des revendications 1 à 12, caractérisée en ce que l'appui avant (28) est constitué par deux volets pivotants définissant entre eux une ouverture de passage et de support de la tige (26) et formant en même temps un bouclier de protection contre les éclaboussures issues du trou de coulée.

14. Machine selon l'une quelconque des revendications 1 à 12, caractérisée par un appui (52) déplaçable le long de l'affût (20).

## Patentansprüche

1. Maschine zum Bohren eines Abstichloches eines Schachtofens, die für die Verwirklichung des Verfahrens der verlorenen Stange ausgelegt ist, bei dem nach dem Verschließen des Abstichloches mit einer Verschlußmasse in diese Verschlußmasse vor ihrer vollständigen Aushärtung eine Metallstange (26) eingeschoben wird, und diese Metallstange in dem gewünschten Augenblick zwecks Öffnung des Abstichloches herausgezogen wird, wobei diese Maschine besteht aus einer Lafette (20), mindestens einer Auflage (28, 52) am vorderen Ende der Lafette (20), einer verschiebbaren Auflage (30) am hinteren Ende der Lafette (20), und einer Zange (34), die dazu bestimmt ist, die durch sie hindurchgehende Stange (26) festzuklemmen, und beim Einschieben der Stange (26) in die Verschlußmasse eine axiale Kraft auf die Stange (26) zu übertragen, wobei die Zange (34) verschiebbar auf der Lafette (20) angebracht ist, und durch einen Hydraulikzylinder (40), dessen Hub L kleiner als die Länge der Stange (26) ist, längs der Lafette (20) verschoben werden kann, dadurch gekennzeichnet, daß der Hydraulikzylinder (40) verschiebbar auf der Lafette (20) angebracht ist, und längs dieser Lafette (20) durch ein kräftiges Antriebsmittel verschoben werden kann, und daß ein Ankupplungsmittel, das dazu bestimmt ist, eine axiale Kraft auf das freie Ende der Stange in Herausziehrichtung dieser Stange zu übertragen, bei dem Vorgang zum Herausziehen der Stange (26) aus dem Abstichloch mit der Zange (34) fest verbunden ist.

2. Maschine gemäß Anspruch 1, dadurch gekennzeichnet, daß dieses kräftige Antriebsmittel aus einem zweiten Hydraulikzylinder (42) besteht.

3. Maschine gemäß Anspruch 2, dadurch gekennzeichnet, daß der Zylinder des ersten Hydraulikzylinders (40) mit dem Zylinder des zweiten Hydraulikzylinders (42) fest verbunden ist, und daß das Ende der Kolbenstange (44) dieses zweiten Hydraulikzylinders (42) an dem hinteren Ende der Lafette (20) verankert ist.

4. Maschine gemäß Anspruch 3, dadurch gekennzeichnet, daß der zweite Hydraulikzylinder (42) über seine Kolbenstange (44) mit Hydraulikfluid versorgt wird.

5. Maschine gemäß Anspruch 4, dadurch gekennzeichnet, daß der erste Hydraulikzylinder (40) über den zweiten Hydraulikzylinder (42) mit Hydraulikfluid versorgt wird.

6. Maschine gemäß Anspruch 1, dadurch gekennzeichnet, daß dieses kräftige Antriebsmittel besteht aus mindestens einer endlosen Kette (64), die in axialer Richtung in der Lafette (20) angebracht ist, und einem Motor (62), dessen Drehrichtung umgekehrt werden kann, und der an dem hinteren Ende der Lafette (20) angebracht ist.

7. Maschine gemäß Anspruch 6, dadurch gekennzeichnet, daß der Hub der Verschiebung des ersten Hydraulikzylinders (40) auf der Lafette (20) durch einen ersten Anschlag (60) und einen zweiten Anschlag (61) begrenzt ist, und daß der Abstand zwischen dem ersten Anschlag (60) und dem zweiten Anschlag (61) ungefähr gleich der Differenz zwischen der Länge der Stange (26) und dem Hub L des Hydraulikzylinders (40) ist.

8. Maschine gemäß irgendeinem der Ansprüche 1 bis 7, dadurch gekennzeichnet, daß die Zange (34) von einem ersten Wagen (36) getragen wird, und der erste Hydraulikzylinder (40) von einem zweiten Wagen (39) getragen wird, daß der erste und der zweite Wagen (36 und 39) bei ihrer Verschiebung auf der Lafette von mindestens einem Schienenpaar aus mit der Lafette fest verbundenen, parallelen Schienen (22, 24) geführt wird, und daß die Achse der Kolbenstange (38) des ersten Hydraulikzylinders (40) in der Ebene liegt, die durch die Achsen der zwei Schienen (22, 24) verläuft.

9. Maschine gemäß irgendeinem der Ansprüche 1 bis 8, dadurch gekennzeichnet, daß dieses Ankupplungsmittel, das dazu bestimmt ist, eine axiale Kraft auf das freie Ende der Stange (26) in der Herausziehrichtung dieser Stange zu übertragen, in die Zange (34) integriert ist.

10. Maschine gemäß Anspruch 9, dadurch gekennzeichnet, daß dieses Ankupplungsmittel ein Backenpaar aufweist, dessen Backen in der Zange so angeordnet sind, daß sie eine Zugkraft in der Herausziehrichtung der Stange (26) übertragen können.

11. Maschine gemäß irgendeinem der Ansprüche 1 bis 8, dadurch gekennzeichnet, daß dieses Ankupplungsmittel, das dazu bestimmt ist, eine axiale Kraft auf das freie Ende der Stange (26) in der Herausziehrichtung dieser Stange zu übertragen, in eine Kupplung (30) integriert ist, die auf einem Arbeitswerkzeug (32) angebracht ist, das auf der Lafette (20) frei verschiebbar ist, und daß die Kupplung (30) mit einer Auflagefläche versehen ist, die so beschaffen ist, daß die Zange (34) bei ihrer Rückwärtsbewegung auf dieser Auflagefläche aufliegen kann.

12. Maschine gemäß Anspruch 8, gekennzeichnet durch ein Arbeitswerkzeug (32), das Mittel aufweist, durch die es so an den ersten Wagen (36) angekuppelt werden kann, daß es durch diesen Wagen verschoben wird.

13. Maschine gemäß irgendeinem der Ansprüche 1 bis 12, dadurch gekennzeichnet, daß die vordere Auflage (28) aus zwei schwenkbaren Klappen besteht, die zwischen sich eine Öffnung zum Durchführen und Tragen der Stange (26) aufweisen, und zugleich einen Schild zum Schutz vor den Spritzern aus dem Abstichloch bilden.

14. Maschine gemäß irgendeinem der Ansprüche 1 bis 12, gekennzeichnet durch eine Auflage (52), die längs der Lafette (20) verschiebbar ist.

## Claims

1. Apparatus for piercing the taphole of a shaft furnace, designed for the implementation of the embedded rod process in which, after having plugged the taphole with taphole clay, a metallic rod (26) is driven into the said clay before it has completely hardened, and the said rod is then extracted, at a desired moment, with a view to opening the taphole, the said apparatus comprising a mounting (20), at least one support (28, 52) at the front of the mounting (20), a sliding support (30) at the rear of the mounting (20) and a clamp (34) designed to grip the rod (26) which passes through it and to transmit to the said rod an axial force during the operation of introducing the rod (26) into the taphole clay, the said clamp (34) being mounted so as to slide on the mounting (20) and being movable along the latter under the action of a hydraulic actuator (40) having a travel L shorter than the length of the rod, characterised in that the said actuator (40) is itself mounted so that it can slide on the mounting (20) and can be moved along the latter under the action of a powerful driving mechanism, and in that a means of coupling, designed to transmit an axial force to the free end of the rod in the direction in which the latter is extracted, is attached to the clamp (34) during the operation of extracting the rod (26) from the taphole.

2. Apparatus according to Claim 1, characterised in that the said powerful driving mechanism comprises a second hydraulic actuator (42).

3. Apparatus according to Claim 2, characterised in that the cylinder of the said first actuator (40) is attached to the cylinder of the said second actuator (42), and in that the end of the piston-rod (44) of this second actuator (42) is fastened to the rear of the mounting (20).

4. Apparatus according to Claim 3, characterised in that the second actuator (42) is supplied with hydraulic fluid through its piston-rod (44).

5. Apparatus according to Claim 4, characterised in that the said first actuator (40) is supplied with hydraulic fluid through the second actuator (42).

6. Apparatus according to Claim 1, characterised in that the said powerful driving mechanism comprises at least one endless chain (64) installed axially in the mounting (20), and a motor (62), whose direction of rotation may be reversed, installed at the rear of the mounting (20).

7. Apparatus according to Claim 6, characterised in that the travel of the movement of the first actuator (40) on the mounting (20) is limited by a first stop (60) and a second stop (61), and in that the distance between the first stop (60) and the second stop (61) is approximately equal to the difference between the length of the rod (26) and the travel L of the hydraulic actuator (40).

8. Apparatus according to any one of Claims 1 to 7, characterised in that the clamp (34) is supported by a first carriage (36) and the first actuator (40) is supported by a second carriage (39), in that the first and second carriages (36 and 39) are guided in their movement on the mounting by at least one pair of parallel rails (22, 24) attached to the mounting, and in that the axis of the piston-rod (38) of the first actuator (40) lies in the plane passing through the axes of the two rails (22, 24).

9. Apparatus according to any one of Claims 1 to 8, characterised in that the said means of coupling, designed to transmit an axial force to the free end of the rod (26) in the direction in which the latter is extracted, is incorporated into the clamp (34).

10. Apparatus according to Claim 9, characterised in that the said means of coupling comprises a pair of jaws positioned in the clamp so that they can transmit a tractive force in the direction in which the rod (26) is extracted.

11. Apparatus according to any one of Claims 1 to 8, characterised in that the said means of coupling, designed to transmit an axial force to the free end of the rod (26) in the direction in which the latter is extracted, is incorporated into a coupling member (30) mounted on a working mechanism (32) capable of sliding freely on the mounting (20), and in that the said coupling member (30) is fitted with a bearing surface positioned so that the clamp (34) can press against the latter during its movement of withdrawal.

12. Apparatus according to Claim 8, characterised by a working mechanism (32) which comprises means of coupling to the first carriage (36) so as to be movable by the latter.

13. Apparatus according to any one of Claims 1 to 12, characterised in that the front support (28) consists of two pivoting flaps defining between them an opening for the passage and support of the rod (26) and at the same time forming a shield for protection against splashes from the taphole.

14. Apparatus according to any one of Claims 1 to 12, characterised by a support (52) capable of moving along the mounting (20).
